(19) Europäisches Patentamt European Patent Office Office européen des brevets

(11) **EP 2 791 620 B1**

(12) **FASCICULE DE BREVET EUROPEEN**

(45) Date de publication et mention
de la délivrance du brevet:
**28.10.2015 Bulletin 2015/44**

(21) Numéro de dépôt: **12816719.4**

(22) Date de dépôt: **12.12.2012**

(51) Int Cl.:
*G01V 7/02* (2006.01)      *G21K 1/00* (2006.01)
*G01C 19/58* (2006.01)      *G01P 15/00* (2006.01)
*G01V 7/00* (2006.01)

(86) Numéro de dépôt international:
**PCT/FR2012/052895**

(87) Numéro de publication internationale:
**WO 2013/088064 (20.06.2013 Gazette 2013/25)**

(54) **MESURE PAR INTERFEROMETRIE ATOMIQUE**

MESSUNG MITTELS ATOMINTERFEROMETRIE

MEASUREMENT BY MEANS OF ATOM INTERFEROMETRY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2011 FR 1161777**

(43) Date de publication de la demande:
**22.10.2014 Bulletin 2014/43**

(73) Titulaire: **ONERA (Office National d'Etudes et de
Recherches
Aérospatiales)
91120 Palaiseau (FR)**

(72) Inventeurs:
• **BIDEL, Yannick**
  **F-91761 Palaiseau (FR)**
• **ZAHZAM, Nassim**
  **F-91761 Palaiseau (FR)**
• **BRESSON, Alexandre**
  **F-91761 Palaiseau (FR)**

(74) Mandataire: **Cabinet Plasseraud
52, rue de la Victoire
75440 Paris Cedex 09 (FR)**

(56) Documents cités:
**FR-A1- 2 848 296**

• **CARRAZ O ET AL: "Compact and robust laser
  system for onboard atom interferometry",
  APPLIED PHYSICS B ; LASERS AND OPTICS,
  SPRINGER, BERLIN, DE, vol. 97, no. 2, 6 août 2009
  (2009-08-06), pages 405-411, XP019758878, ISSN:
  1432-0649, DOI: 10.1007/S00340-009-3675-9 cité
  dans la demande**
• **A PETERS ET AL: "High-precision gravity
  measurements using atom interferometry",
  METROLOGIA, vol. 38, no. 1, 1 février 2001
  (2001-02-01), pages 25-61, XP055007974, ISSN:
  0026-1394, DOI: 10.1088/0026-1394/38/1/4**

EP 2 791 620 B1

**Description**

La présente invention concerne la réalisation de mesures par interférométrie atomique.

Il est connu de produire une interférence entre des ondes de matière qui sont associées à des atomes froids, pour mesurer très précisément des accélérations. Des appareils qui mettent en oeuvre de telles interférences atomiques sont par exemple des accéléromètres, des gyromètres, des gravimètres, des gradiomètres, etc.

D'une façon simplifiée, une onde de matière associée à un ensemble d'atomes qui sont initialement dans un état fondamental, le plus souvent d'une structure hyperfine, est divisée en deux par une première interaction avec un rayonnement laser. La durée de cette interaction peut être sélectionnée par exemple pour que les deux ondes de matière aient des amplitudes sensiblement égales. Une telle interaction a une fonction équivalente à celle d'une lame séparatrice en optique, et est appelée impulsion $\pi/2$ dans le jargon de l'Homme du métier.

Des interactions supplémentaires sont ensuite produites entre les atomes de chaque onde de matière et des impulsions laser ultérieures, selon une séquence d'interactions successives qui produit finalement l'interférence entre les ondes de matière. Un détecteur est alors placé dans le champ d'interférence, pour mesurer le nombre d'atomes qui se trouvent dans l'un ou l'autre des états atomiques : l'état fondamental ou l'état d'énergie supérieure. Du fait de l'interférence, ce nombre d'atomes mesuré dépend d'un déphasage qui a été progressivement accumulé entre les deux ondes de matière depuis leur séparation par l'impulsion $\pi/2$, et qui contient l'information de mesure recherchée.

Chaque interaction entre un atome et le rayonnement laser a deux effets simultanés : provoquer une transition de l'atome entre ses deux états quantiques, dans un sens qui est opposé entre une absorption et une émission, et simultanément une variation de la quantité de mouvement de l'atome qui correspond à l'impulsion du rayonnement absorbé ou émis.

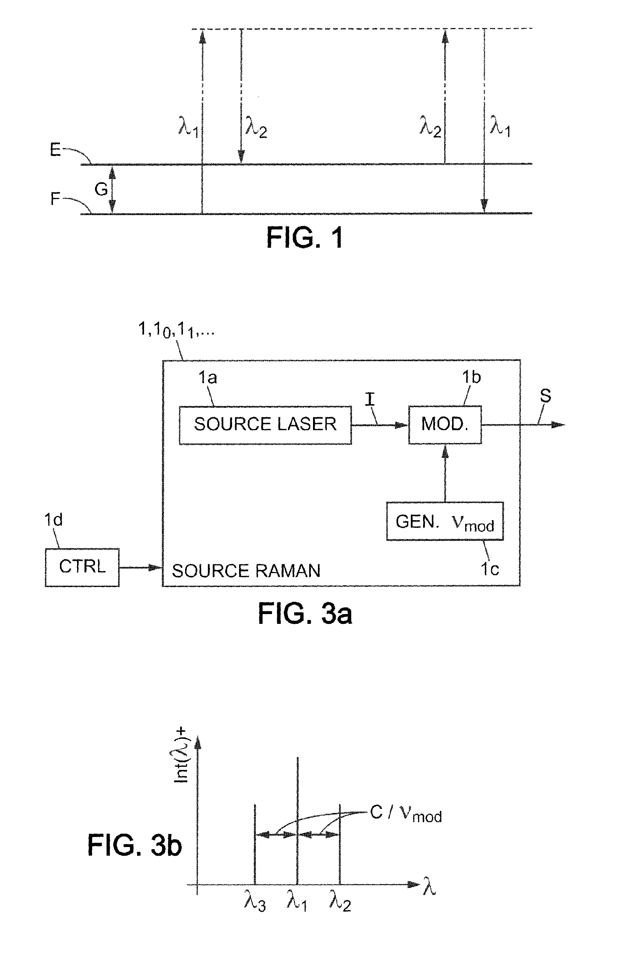

Usuellement, une source Raman est utilisée pour générer le rayonnement laser qui produit chaque interaction avec l'un des atomes. Une telle source Raman produit en fait deux composantes monochromatiques de rayonnement, chacune de type laser, dont les longueurs d'onde respectives sont sélectionnées pour provoquer une interaction à deux photons avec un atome. Ces deux composantes monochromatiques forment des faisceaux qui sont superposés spatialement, parallèles à une même direction de propagation, et qui se propagent chacune simultanément dans les deux sens opposés le long de cette direction commune. L'interaction entre un tel rayonnement laser composite et les atomes comprend une absorption et une émission, de sorte que la différence entre les énergies des états atomiques soit égale à la différence entre les fréquences respectives des deux composantes monochromatiques du rayonnement, multipliée par la constante de Planck h. La variation de quantité de mouvement de l'atome qui subit l'interaction est alors égale à la somme de ces fréquences, multipliée par h/C, où C est la vitesse de propagation du rayonnement laser. La figure 1 illustre de telles interactions, dans le cas d'une absorption d'énergie sur la partie gauche de la figure, et d'une émission pour la partie droite de la figure. Les références qui sont indiquées dans cette figure ont les significations suivantes :

F : état fondamental des atomes

E : état de la structure fine des atomes, qui possède une énergie supérieure à celle de l'état F

G : différence d'énergie entre les états F et E

$\lambda_1$, $\lambda_2$ : longueurs d'onde respectives des deux composantes monochromatiques du rayonnement laser qui est produit par la source Raman

La source Raman peut avoir plusieurs constitutions connues.

Selon l'une de ces constitutions, la source Raman comprend deux sources laser séparées qui produisent chacune l'une des composantes monochromatiques du rayonnement laser total de la source Raman. Les fréquences respectives des deux sources laser sont ajustées précisément l'une par rapport à l'autre en superposant les deux composantes monochromatiques sur une photodiode rapide. La photodiode permet alors de détecter le battement de la superposition d'onde, avec la fréquence de ce battement qui correspond à la différence entre les fréquences des deux sources laser. Il est possible ainsi d'accorder précisément cette différence de fréquences à l'écart d'énergie G entre les niveaux atomiques F et E. Mais une telle constitution de la source Raman est complexe et volumineuse, puisqu'elle comprend deux sources laser séparées. Pour cette raison, elle n'est pas adaptée pour réaliser des appareils de mesure par interférométrie atomique qui soient compacts et aient des poids aussi réduits que possible. La contrainte pondérale est encore plus importante pour les appareils qui sont destinés à être embarqués à bord d'un aéronef tel qu'un avion ou un hélicoptère, ou à bord d'un engin spatial tel qu'une fusée, un satellite ou une sonde spatiale.

Selon une autre constitution connue, la source Raman ne comporte qu'une seule source laser, qui est modulée en amplitude ou en fréquence, ou les deux à la fois. Une telle source Raman est décrite notamment dans l'article de O. Carraz et al. intitulé «Compact and robust laser system for onboard atom interferometry», Applied Physics B (2009) 97, pp. 405-411, et aussi dans la thèse de O. Carraz intitulée «Gravimètre atomique embarquable : Etude théorique et expérimentale de l'instrument», et présentée le 19 décembre 2009 à l'Observatoire de Paris. La source Raman qui est ainsi constituée est particulièrement compacte et robuste, si bien qu'elle est adaptée pour la réalisation d'appareils de mesure eux-mêmes peu encombrants et peu lourds. Mais un tel mode de génération du rayonnement laser pour interactions Raman - par modulation d'une source laser unique - produit simultanément au moins trois composantes monochromatiques de rayonnement qui ont des fréquences respectives distinctes. Or deux seulement de ces fréquences sont utiles pour les mesures qui sont réalisées par interférométrie atomique. La composante monochromatique supplémentaire qui résulte de la modulation de la source laser produit alors un biais de mesure, qui produit à son tour une erreur dans le résultat de la mesure.

Dans ces conditions, un but de la présente invention consiste à réaliser des mesures par interférométrie atomique qui soient dépourvues d'un tel biais de mesure, tout en utilisant un appareil qui soit compact, robuste et aussi léger que possible.

Pour atteindre ce but et d'autres, l'invention propose un procédé de mesure par interférométrie atomique, dans lequel plusieurs interactions sont successivement provoquées entre un rayonnement laser et des atomes. Les atomes évoluent sur une trajectoire qui n'est pas située dans un plan perpendiculaire à une direction de propagation du rayonnement laser, de façon à former un interféromètre pour les atomes.

Le rayonnement laser qui est utilisé pour chaque interaction, à des positions différentes des atomes sur leur trajectoire, comprend au moins une première et une seconde composante monochromatique avec des fréquences respectives qui sont distinctes, de sorte que l'interaction soit de type Raman à deux photons, avec une absorption et une émission stimulée chacune par la première ou la seconde composante monochromatique.

En outre, la première composante monochromatique est une partie d'un rayonnement laser initial, et la seconde composante monochromatique résulte d'une modulation du même rayonnement laser initial à une fréquence de modulation déterminée. Autrement dit, la source Raman qui est utilisée pour l'invention présente la seconde constitution qui a été présentée plus haut.

Le procédé de l'invention est caractérisé en ce qu'une distance entre deux quelconques des positions auxquelles sont provoquées des interactions, mesurée selon la direction de propagation du rayonnement laser, est multiple d'une longueur de modulation à ±10% près de cette longueur de modulation. La longueur de modulation est égale à la vitesse de propagation du rayonnement laser divisée par le double de la fréquence de modulation déterminée. De cette façon, un résultat de la mesure n'est pas sensiblement modifié par une troisième ou plusieurs autres composante(s) monochromatique(s) du rayonnement laser qui résulte(nt) de la modulation du rayonnement laser initial et qui participe(nt) à des interactions supplémentaires de type Raman à deux photons avec les atomes, cette troisième ou ces autres composante(s) monochromatique(s) ayant une (des) longueur(s) d'onde qui est (sont) différente(s) de celles des première et seconde composantes monochromatiques.

Ainsi, l'invention permet d'utiliser une source Raman à une seule source laser, tout en s'affranchissant du biais de mesure que produit au moins une composante monochromatique de rayonnement supplémentaire qui est due à la modulation de cette source laser, mais qui n'est pas utilisée pour réaliser la mesure. Ce biais de mesure est annulé ou au moins réduit en sélectionnant selon l'invention les positions sur la trajectoire des atomes où sont produites les interactions avec le rayonnement laser. Un appareil de mesure qui est compact, robuste et plus léger peut ainsi être utilisé.

Dans une formulation mathématique, l'invention équivaut à la relation (1) suivante, qui est satisfaite quelque soit un couple d'interactions successives entre le rayonnement laser et les atomes :

$$\mathbf{u} \cdot (\mathbf{r}_{n+1} - \mathbf{r}_n) = m_{n+1} \cdot C/(2 \cdot v_{mod}) \qquad (1)$$

où n est un indice entier positif ou nul qui compte les interactions successives entre les atomes et le rayonnement laser le long de la trajectoire des atomes, n=0 correspondant à la première interaction, $\mathbf{u}$ est un vecteur unitaire de la direction de propagation du rayonnement laser, $\mathbf{r}_{n+1}$ et $\mathbf{r}_n$ sont des vecteurs qui relient un point d'origine aux positions respectives des atomes lors des interactions successives n et n+1, $m_{n+1}$ est un nombre entier non nul pour le couple des interactions n et n+1, et $v_{mod}$ est la fréquence de modulation déterminée du rayonnement laser monochromatique initial.

En introduisant la tolérance de 10% pour l'application de l'invention, l'équation (1) devient :

$$\left| \mathbf{u} \cdot (\mathbf{r}_{n+1} - \mathbf{r}_n) - m_{n+1} \cdot C/(2 \cdot v_{mod}) \right| \leq 0,1 \cdot C/(2 \cdot v_{mod}) \qquad (1')$$

dans laquelle les barres verticales désignent la valeur absolue. Préférentiellement pour plus réduire le biais de mesure résiduel, la tolérance de 10% peut être remplacée par 5%, ou réduite encore jusqu'à 2%, voire 1%.

Dans des configurations simplifiées possibles pour mettre en oeuvre l'invention, la trajectoire des atomes peut être rectiligne et parallèle à la direction de propagation du rayonnement laser, et superposée à celui-ci.

Dans des mises en oeuvre particulières de l'invention lorsque les atomes ne sont soumis qu'à un champ de pesanteur ou champ gravitationnel noté **g**, les relations suivantes peuvent être satisfaites quelque soit le couple d'interactions successives entre le rayonnement laser et les atomes, à moins de 5% près par rapport à la valeur de chaque membre d'égalité, de préférence à moins de 2% près :

$$T = [a \cdot C / (2 \cdot v_{mod} \cdot \mathbf{g} \cdot \mathbf{u})]^{1/2} \qquad (2a)$$

$$\mathbf{v}_0 \cdot \mathbf{u} = (b - a/2) \cdot [C \cdot \mathbf{g} \cdot \mathbf{u} / (2 \cdot a \cdot v_{mod})]^{1/2} \qquad (2b)$$

où T est la durée de séparation entre les deux interactions successives, **u** est encore le vecteur unitaire parallèle à la direction de propagation du rayonnement laser, a et b sont des nombres entiers, a étant non nul, et $\mathbf{v}_0$ est un vecteur de vitesse des atomes au moment de la première interaction de la séquence d'interactions. Les nombres a et b sont constants pour tous les couples d'interactions successives, si bien que toutes les interactions sont provoquées à intervalles de temps réguliers, séparés de la durée T.

De façon générale, un procédé selon l'invention peut être utilisé pour mesurer une accélération, une vitesse de rotation, un champ de pesanteur, ou un gradient de champ de pesanteur.

De façon générale aussi, les interactions successives peuvent former une séquence quelconque, notamment à base d'impulsions $\pi/2$ et d'impulsions $\pi$, éventuellement rallongées de multiples de $2 \cdot \pi$.

De façon générale encore, la distance entre deux des positions des atomes auxquelles sont provoquées des interactions peut être ajustée selon l'une des méthodes suivantes, pour des mises en oeuvre préférées de l'invention :

/i/ en ajustant les intervalles de temps séparant les interactions entre les atomes et le rayonnement laser et en ajustant la vitesse initiale des atomes lors d'un lancement de ceux-ci au début de la trajectoire ; ou

/ii/ en ajustant les intervalles de temps séparant les interactions entre les atomes et le rayonnement laser et en ajustant une durée d'attente entre le placement des atomes au début de la trajectoire, avec une vitesse initiale nulle pour les atomes, et la première interaction des atomes avec le rayonnement laser ; ou

/iii/ en combinant les méthodes /i/ et /iii/.

L'invention propose aussi un appareil de mesure par interférométrie atomique, qui comprend :

- une source d'atomes, qui est adaptée pour produire un ensemble initial d'atomes destinés à évoluer sur une trajectoire ;

- un système d'interférométrie, qui est adapté pour former un interféromètre pour les atomes, et qui comprend lui-même :

. un dispositif de production d'un rayonnement laser, agencé pour provoquer successivement plusieurs interactions entre des atomes et le rayonnement laser, et comprenant pour produire chaque interaction :

une source laser adaptée pour produire un rayonnement laser monochromatique initial ; et

un modulateur agencé pour moduler le rayonnement laser monochromatique initial, de sorte que chaque rayonnement laser utilisé pour chaque interaction comprenne au moins une première et une seconde composantes monochromatiques ayant des fréquences respectives qui sont distinctes, et adaptées pour que chaque interaction soit du type Raman à deux photons, avec une absorption et une émission stimulée chacune par la première ou la seconde composante monochromatique, la première composante monochromatique étant une partie du rayonnement laser monochromatique initial, et la seconde composante monochromatique résultant d'une modulation de ce rayonnement laser monochromatique initial réalisée par le modulateur à une fréquence de modulation déterminée ; et

. une unité de contrôle, qui est adaptée pour envoyer le rayonnement laser sur les atomes lorsque ceux-ci se trouvent à des positions déterminées sur la trajectoire, cette trajectoire n'étant pas située dans un plan perpendiculaire à la direction de propagation du rayonnement laser ; et

- un dispositif de détection, qui est agencé pour fournir un résultat de mesure basé sur l'interférence.

L'appareil de l'invention est caractérisé en ce que l'unité de contrôle est en outre ajustée pour envoyer le rayonnement laser sur les atomes lorsque la distance entre deux quelconques des positions auxquelles sont provoquées des interactions, mesurées selon la direction de propagation du rayonnement laser, est multiple d'une longueur de modulation à $\pm 10\%$ près de cette longueur de modulation, et cette longueur de modulation étant égale à la vitesse de propagation du rayonnement laser divisée par le double de la fréquence de modulation déterminée. Un tel appareil est adapté pour mettre en oeuvre un procédé de mesure tel que décrit précédemment, si bien que le résultat de la mesure n'est pas sensiblement modifié par une ou plusieurs autre(s) composante(s) du rayonnement laser qui résulte(nt) de la modulation du rayonnement laser monochromatique initial et qui participe(nt) à des interactions supplémentaires de type Raman à deux photons avec les atomes, et qui a (ont) une (des) longueur(s) d'onde différente(s) de celles des première et seconde composantes monochromatiques.

De préférence, l'unité de contrôle peut être ajustée pour que la tolérance de 10% soit remplacée par 5%, ou réduite à 2%, voire 1%.

Un tel appareil de mesure selon l'invention peut être du type capteur inertiel, tel qu'un accéléromètre, un gyromètre, un gravimètre ou un gradiomètre.

Lorsque la distance entre deux des positions des atomes auxquelles sont provoquées des interactions est ajustée selon l'une des méthodes /i/, /ii/ et /iii/ énumérées plus haut, l'appareil peut comprendre en outre des moyens pour modifier une vitesse des atomes lors de la première interaction entre les atomes et le rayonnement laser et des moyens pour modifier les instants d'interaction entre les atomes et le rayonnement laser, ces moyens étant agencés de sorte que la distance entre deux des positions des atomes auxquelles sont provoquées des interactions soit ajustée en modifiant la vitesse initiale des atomes et les instants des interactions entre les atomes et le rayonnement. Le moyen pour contrôler la vitesse des atomes est par exemple l'utilisation d'un délai d'attente variable entre le début de la trajectoire des atomes et la première interaction entre les atomes et le rayonnement laser. Ce moyen peut être également un lancement des atomes au début de la trajectoire. Le moyen pour contrôler les instants d'interaction entre les atomes et le rayonnement laser est par exemple l'utilisation d'un obturateur optique. Il comprend alors aussi des moyens de commande de l'obturateur qui sont adaptés pour ajuster la distance entre deux des positions des atomes auxquelles sont provoquées les interactions.

D'autres particularités et avantages de la présente invention apparaîtront dans la description ci-après d'exemples de mise en oeuvre non limitatifs, en référence aux dessins annexés, dans lesquels :

- la figure 1 est un diagramme illustrant des interactions de type Raman entre des atomes et un rayonnement laser ;

- les figures 2a et 2b représentent deux configurations possibles d'appareils de mesure par interférométrie atomique conformes à l'invention ;

- la figure 3a illustre une constitution de source Raman, pour laquelle l'invention trouve son utilité ;

- la figure 3b est un diagramme spectral d'un rayonnement laser produit par une source Raman correspondant à la figure 3a ;

- les figures 4a et 4b correspondent à la figure 1, pour montrer des interactions Raman supplémentaires apparaissant lorsqu'un rayonnement laser conforme à la figure 3b est utilisé ; et

- les figures 5a à 5c illustrent une interprétation de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

La figure 1 qui a déjà été décrite en détail n'est pas reprise ici. Toutefois, sa signification et ses références sont utilisées dans la suite.

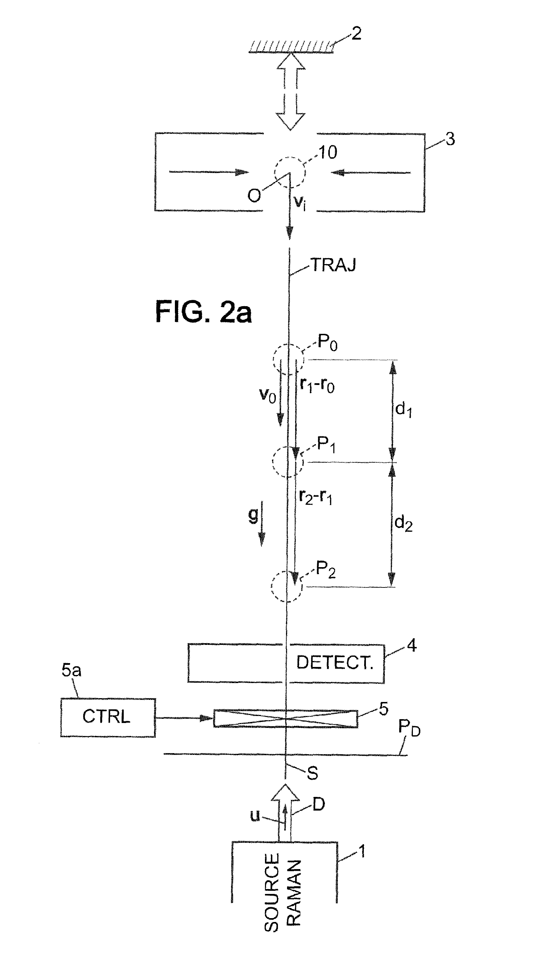

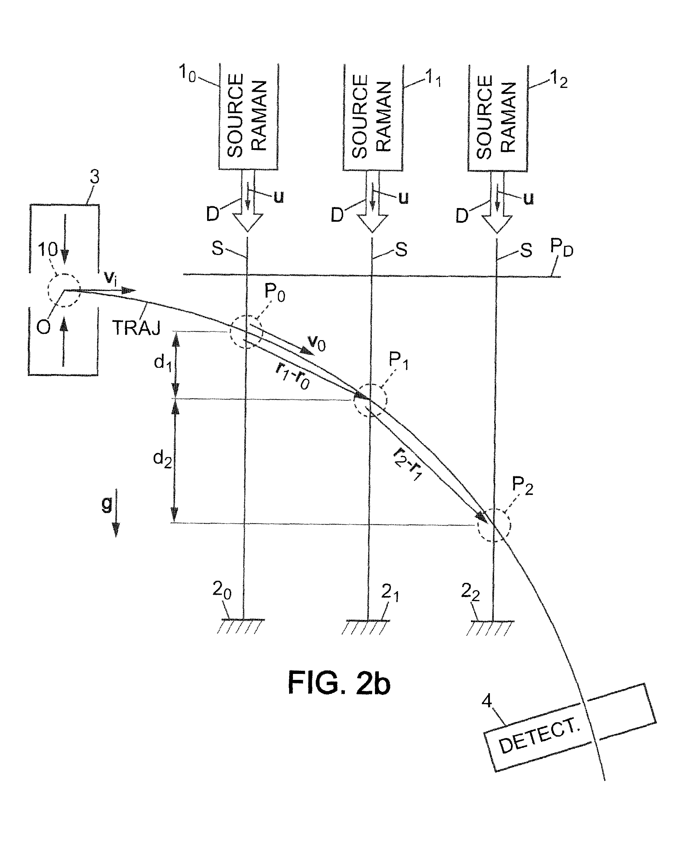

Conformément à la figure 2a ou 2b, un ensemble d'atomes froids 10, à une température de l'ordre de 1 $\mu$K (microkelvin) par exemple, est produite par un piège magnéto-optique 3. Le fonctionnement d'un tel piège magnéto-optique n'est pas l'objet de l'invention et est connu de l'Homme du métier, si bien qu'il n'est pas nécessaire de le répéter ici. L'ensemble d'atomes 10 peut contenir quelques millions d'atomes. Après la sortie du piège 3, l'ensemble d'atomes 10 est soumis à des forces inertielles et décrit la trajectoire TRAJ. $\mathbf{v}_i$ est le vecteur de vitesse initiale des atomes 10 au point de début de la trajectoire TRAJ. Des moyens spécifiques (non représentés) peuvent être utilisés pour transférer les atomes 10 à partir du piège 3 jusqu'au point de début de la trajectoire TRAJ, tout en ajustant la vitesse initiale $\mathbf{v}_i$. De tels moyens de transfert et de lancement initial des atomes 10 sont connus, si bien qu'il n'est pas nécessaire non plus de les décrire à nouveau ici. Par exemple, un ascenseur à onde électromagnétique quasi-stationnaire peut être utilisé.

Lorsque les atomes 10 se trouvent à différentes positions sur la trajectoire TRAJ, ils subissent plusieurs interactions Raman successives avec des rayonnements laser appropriés notés S. Par exemple, les atomes 10 subissent trois interactions Raman lorsqu'ils se trouvent dans les positions $P_0$, $P_1$ et $P_2$ sur la trajectoire TRAJ. Ces positions peuvent être repérées par rapport à un point d'origine quelconque O, qui peut être par exemple le point de début de la trajectoire TRAJ. $\mathbf{r}_n$ désigne alors le vecteur qui relie ce point d'origine O à la position $P_n$, n étant un indice qui repère les interactions Raman successives, dans leur ordre chronologique le long de la trajectoire TRAJ : n=0, 1 ou 2 pour le cas représenté de trois interactions. Les vecteurs différentiels $\mathbf{r}_1-\mathbf{r}_0$ et $\mathbf{r}_2-\mathbf{r}_1$ sont indiqués sur les figures 2a et 2b. $\mathbf{v}_0$ est le vecteur vitesse des atomes 10 lors de la première interaction Raman, produite lorsque les atomes 10 sont à la position $P_0$.

Pour l'application de l'invention, tous les rayonnements laser qui sont utilisés ont des directions de propagation qui sont parallèles entre elles. Etant donné qu'il s'agit de rayonnements Raman, ils se propagent chacun simultanément dans les deux sens de cette direction. Les références et notations suivantes sont utilisées :

D : direction de propagation commune des rayonnements laser

$\mathbf{u}$ : vecteur unitaire parallèle à la direction D

$P_D$ plan perpendiculaire à la direction D

1, $1_0$, $1_1$, $1_2$ : sources Raman décrites plus loin

2, $2_0$, $2_1$, $2_2$ : miroirs ou ensembles de miroirs permettant d'obtenir la propagation dans les deux sens de chaque rayonnement laser

$d_1$ : distance entre les points $P_0$ et $P_1$, mesurée selon la direction D

$d_2$ : distance entre les points $P_1$ et $P_2$, mesurée selon la direction D

Autrement dit : $d_1 = \mathbf{u} \cdot (\mathbf{r}_1 - \mathbf{r}_0)$ et $d_2 = \mathbf{u} \cdot (r2 - \mathbf{r}_1)$.

Pour l'invention, la trajectoire TRAJ n'est pas comprise dans un plan $P_D$ perpendiculaire à l'axe du rayonnement Raman.

Les instants d'émission et les durées des impulsions de rayonnement laser peuvent être contrôlés par un obturateur optique 5, lui-même commandé par un contrôleur 5a (figure 2a).

La séquence des interactions Raman successives est sélectionnée pour constituer un interféromètre à onde de matière. Par exemple, cette séquence peut être constituée d'une interaction $\pi/2$ lorsque les atomes 10 sont à la position $P_0$, d'une interaction $\pi$ lorsque les atomes sont à la position $P_1$, et d'une nouvelle interaction $\pi/2$ à la position $P_2$, avec des durées de séparation qui sont identiques entre la première impulsion $\pi/2$ et l'impulsion $\pi$ d'une part, et entre cette impulsion $\pi$ et la seconde impulsion $\pi/2$. Une telle séquence est du type Mach-Zehnder et supposée connue. Mais il est entendu que toute la présente description de l'invention peut être appliquée à une séquence quelconque d'impulsions qui produit un interféromètre à onde atomique, avec des nombres d'impulsions variables. Par exemple, une autre séquence possible peut être constituée de quatre impulsions $\pi/2$ qui sont produites respectivement aux instants $t_0$, $t_0+T$, $t_0+T+T$ et $t_0+2T+T'$, où $t_0$ est l'instant de la première impulsion, et T et T' sont deux durées d'attente. Une autre séquence aussi possible à quatre impulsions peut être $\pi/2$ à $t_0$, $\pi$ à $t_0+T$ et $t_0+2T+T'$, puis de nouveau $\pi/2$ à $t_0+2T+2T'$.

Enfin, les atomes 10 sont détectés ultérieurement par un détecteur 4, noté DETECT., pour déterminer les nombres de ces d'atomes qui se trouvent respectivement dans l'état fondamental F et dans l'état excité E (voir figure 1). Par effet d'interférence atomique, ces nombres dépendent d'un déphasage qui est produit par les effets inertiels que subissent les atomes 10 entre les interactions Raman successives. Le fonctionnement du détecteur 4 est aussi supposé connu. Par exemple, il peut fonctionner par détection de la fluorescence qui est produite par les atomes 10.

La configuration de la figure 2a est linéaire, avec la trajectoire TRAJ qui est rectiligne, parallèle à la direction D et superposée au rayonnement laser S. Dans ce cas, la même source Raman référencée 1 peut être utilisée pour générer toutes les impulsions de rayonnement laser S qui produisent les interactions Raman avec les atomes 10.

Dans la configuration de la figure 2b, plusieurs sources Raman $1_0$, $1_1$,... sont utilisées avec des faisceaux laser respectifs qui sont décalés perpendiculairement à la direction de propagation D et au vecteur unitaire u qui est associé avec celle-ci. Dans ce cas, la trajectoire TRAJ peut être courbe. Les positions d'interactions des atomes 10 avec les rayonnements laser S des sources Raman $1_0$, $1_1$,... sont alors situées aux intersections entre la trajectoire TRAJ et les faisceaux respectifs de ces rayonnements.

De tels appareils de mesure par interférométrie atomique sont connus avant la présente invention, notamment pour les deux configurations des figures 2a et 2b.

L'invention est utile lorsque l'une au moins des sources Raman, ou chaque source Raman, qui est utilisée possède la seconde constitution qui a été décrite plus haut. Cette constitution est illustrée dans son principe par la figure 3a. La source Raman 1 (ou $1_0$, $1_1$,...) comprend ainsi une source laser 1 a qui produit un rayonnement monochromatique initial référencé I, et ayant la longueur d'onde $\lambda_1$. Ce rayonnement I est introduit dans un modulateur 1b, qui est noté MOD. et qui est connecté par une entrée de commande à un générateur de fréquence 1c noté GEN. La fréquence qui est produite par le générateur 1 c est notée $v_{mod}$, et la modulation qui est réalisée par le modulateur 1 b peut être une modulation du rayonnement initial I en fréquence, en amplitude, ou une modulation mixte en fréquence et en amplitude. Le rayonnement laser S qui sort du modulateur 1 b constitue le rayonnement de sortie de la source Raman 1. Il produit alors l'une des interactions Raman avec les atomes 10. Dans la présente description, le rayonnement S est appelé simplement rayonnement laser, tel qu'il est produit par l'ensemble de la source Raman 1, ou $1_0$, $1_1$,...

Chaque source Raman 1, ou $1_0$, $1_1$,... peut être couplée avec une unité de contrôle qui est notée CTRL et référencée 1 d. L'unité 1 d est adaptée pour commander un fonctionnement de cette source Raman qui soit conforme au principe de l'interféromètre atomique utilisé. En particulier, l'unité 1d commande le générateur de fréquence 1 c, et peut commander en outre le modulateur 1 b pour déclencher l'émission des impulsions du rayonnement laser S, ainsi que commander la durée de ces impulsions.

Le rayonnement laser S qui est ainsi produit possède alors au moins trois composantes monochromatiques comme représenté dans le diagramme spectral de la figure 3b. Dans ce diagramme, l'axe horizontal repère les valeurs de longueur d'onde $\lambda$, et l'axe vertical repère la densité spectrale, notée Int($\lambda$). La première composante possède la longueur d'onde $\lambda_1$ du rayonnement initial I tel que produit directement par la source laser 1a. Les composantes monochromatiques qui sont créées par la modulation ont des longueurs d'onde qui sont respectivement égales à $\lambda_1 + k \cdot C/v_{mod}$, où C est la vitesse de propagation du rayonnement laser, et k est un nombre entier non nul, positif ou négatif. Pour la suite de la description, seules les composantes monochromatiques qui correspondent à k=±1, en plus de la composante de longueur d'onde $\lambda_1$ sont considérées, mais il est entendu que les avantages de l'invention sont obtenus quelque soit le nombre des composantes monochromatiques qui résultent de la modulation et sont présentes dans le rayonnement laser S. Dans la suite, on note $\lambda_2 = \lambda_1 + C/V_{mod}$ et $\lambda_3 = \lambda_r C/v_{mod}$ les longueurs d'onde des deux composantes monochromatiques supplémentaires du rayonnement laser S, en plus de la composante à la longueur d'onde initiale $\lambda_1$, et qui correspondent à k=±1.

Les composantes monochromatiques du rayonnement S qui ont respectivement les longueurs d'onde $\lambda_1$ et $\lambda_2$ provoquent des absorptions Raman (partie gauche de la figure 1) et des émissions Raman (partie droite de la figure 1) comme cela a déjà été décrit.

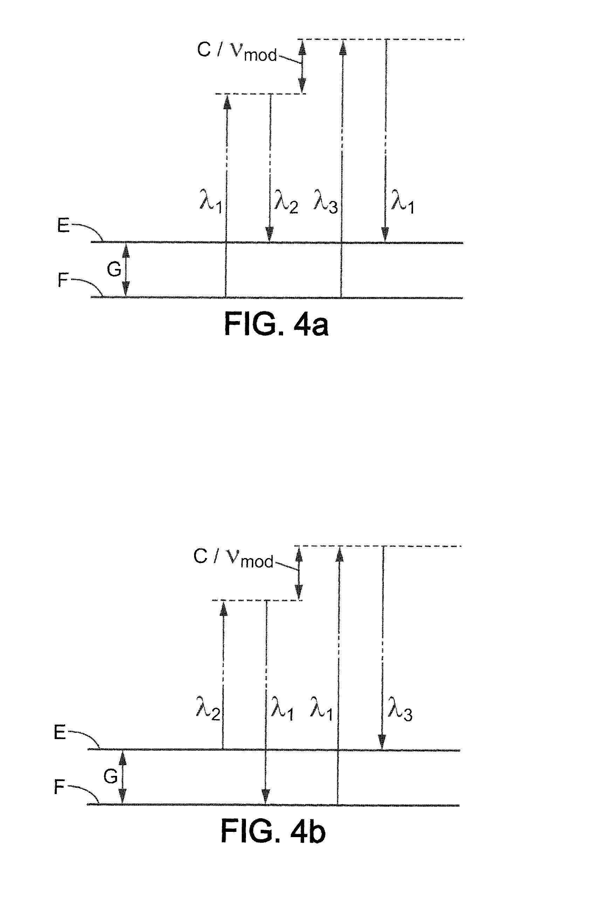

Mais le couple des composantes monochromatiques de longueurs d'onde respectives $\lambda_3$ et $A_1$, qui est aussi contenu dans le rayonnement laser S, produit de la même façon des absorptions et des émissions Raman. La figure 4a illustre les absorptions Raman qui résultent du couple des composantes monochromatiques à $\lambda_1$ et $\lambda_2$ (partie gauche de la figure 4a, identique à la partie gauche de la figure 1), ainsi que celles qui résultent du couple des composantes monochromatiques à $\lambda_3$ et $\lambda_1$ (partie droite de la figure 4a). La direction verticale des figures 1, 4a et 4b correspond aux écarts énergétiques entre les niveaux atomiques, qui sont inversement proportionnels aux valeurs de longueur d'onde $\lambda$. De même, la figure 4b illustre les émissions Raman qui résultent du couple des composantes monochromatiques à $\lambda_1$ et $\lambda_2$ (partie gauche de la figure 4b, identique à la partie droite de la figure 1), ainsi que celles qui résultent du couple des composantes monochromatiques à $\lambda_3$ et $\lambda_1$ (partie droite de la figure 4b). La présence de plusieurs possibilités d'absorption et d'émission Raman produit un biais de mesure qui, à son tour, produit une erreur dans le résultat de la mesure d'interférométrie à onde de matière.

Selon l'invention, ce biais est annulé ou réduit si l'écart entre les positions d'interactions Raman $P_n$, pour tous les couples de positions $P_n$ où ces interactions sont produites, est un multiple de $C/(2 \cdot v_{mod})$. Les notations n, $P_n$, C et $v_{mod}$ sont celles qui ont été introduites précédemment. La relation (1) qui est indiquée dans la partie générale de cette description est alors vérifiée, quelque soit le couple d'interactions Raman successives n et n+1 le long de la trajectoire TRAJ, pour n=0, n=1, etc. Avec les notations introduites pour les figures 2a et 2b, la relation (1) devient :

$$d_1 = m_1 \cdot C/(2 \cdot v_{mod}) \text{ et } d_2 = m_2 \cdot C/(2 \cdot v_{mod})$$

où $m_1$ et $m_2$ sont deux entiers naturels positifs.

A titre d'illustration et par souci de clarté, la description détaillée de l'invention est maintenant poursuivie dans le cas d'un gravimètre, destiné à mesurer très précisément l'intensité de la pesanteur. L'orientation de la pesanteur, notée **g**, est indiquée dans les figures 2a et 2b. Pour une telle mesure, l'appareil est orienté de sorte que le vecteur unitaire **u** ne soit pas perpendiculaire à la direction de la pesanteur **g**, d'après le principe de la mesure par interférométrie à onde de matière. En outre, une première estimation de la valeur de l'intensité de g peut être fournie initialement, à partir de laquelle la mesure par interférométrie à onde de matière produit une valeur mesurée qui est beaucoup plus précise. Une telle estimation initiale de l'intensité de la pesanteur peut résulter d'une mesure antérieure qui a été effectuée en utilisant le même appareil d'interférométrie à onde de matière, ou en utilisant un modèle géodésique, ou encore en utilisant tout autre appareil de mesure du champ de pesanteur, notamment de type accéléromètre usuel. Dans le cas de la pesanteur terrestre, une estimation initiale de 9,8 m/s$^2$ (mètre par seconde au carré) peut être utilisée.

Toutes les distances et vitesses qui sont considérées dans la suite sont mesurées selon la direction D, orientée selon le vecteur unitaire **u**. De préférence, l'appareil peut être orienté pour que le vecteur **u** soit parallèle à la direction de la pesanteur **g**. Dans ce cas, la vitesse des atomes 10 à l'instant de leur première interaction avec le rayonnement laser S pour provoquer des absorptions Raman, est $v_0 = g \cdot t_0 + v_i$, où $t_0$ est la durée de vol des atomes 10 entre leur placement au début de la trajectoire TRAJ et l'instant de la première interaction. Dans ce cas, la durée $t_0$ et/ou la vitesse initiale $v_i$ des atomes 10 est (sont) ajustée(s) pour que $v_0$ possède l'une des valeurs suivantes :

$$v_0 = (b - a/2) \cdot [C \cdot g/(2 \cdot a \cdot v_{mod})]^{1/2} \qquad (2b')$$

lorsque a est un nombre entier positif non nul et b est un nombre entier positif ou négatif, éventuellement nul. Dans ce cas, la durée constante T de séparation entre deux interactions successives est :

$$T = [a \cdot C / (2 \cdot v_{mod} \cdot g)]^{1/2} \qquad (2a')$$

Dans des modes de mise en oeuvre préférés de l'invention, pour lesquelles les interactions successives entre les atomes 10 et le rayonnement laser S constituent une séquence de type Mach-Zehnder, comprenant trois impulsions de rayonnement laser qui sont produites à intervalles de temps réguliers : une première impulsion $\pi/2$, puis une seconde impulsion $\pi$, et une dernière impulsion $\pi/2$, le nombre b qui permet d'avoir l'appareil le plus compact pour un nombre a donné, c'est-à-dire pour une durée T donnée entre deux interactions successives, est égal à b=(-a+1)/2 si le nombre a est impair, et b=(-a+2)/2 si le nombre a est pair. Ces configurations sont possibles si la vitesse initiale des atomes est opposée à l'accélération de la pesanteur **g**, c'est-à-dire lorsque les atomes sont lancés. Lorsqu'il n'y a pas de lancement, c'est-à-dire que la vitesse initiale des atomes est dans le même sens que l'accélération de la pesanteur, le nombre b qui permet d'avoir l'appareil le plus compact pour un nombre a donné, c'est-à-dire pour une durée T donnée entre deux interactions successives, est égal à b=(a+1)/2 si le nombre a est impair, et b=(a+2)/2 si le nombre a est pair.

Le tableau suivant regroupe d'autres exemples numériques de gravimètres selon l'invention. Les atomes utilisés sont du rubidium 87 et la fréquence de modulation $v_{mod}$ qui est utilisée pour la source Raman est 6,8 GHz (gigahertz). L est la longueur de la zone, mesurée parallèlement à la pesanteur **g**, dans laquelle la trajectoire TRAJ des atomes est inscrite entre le point de départ où les atomes 10 sont placés avec la vitesse initiale $v_i$ sur cette trajectoire et la position $P_{N-1}$ des atomes où la dernière interaction (N-1) est produite avec le rayonnement laser S.

| a | b | $t_0$ (ms) | $v_i$ (m·s$^{-1}$) | $v_0$ (m·s$^{-1}$) | T (ms) | L (cm) |
|---|---|---|---|---|---|---|
| 1 | 0 | 23,7 | 0 | 0,232 | 47,4 | 6,9 |
| 1 | 1 | 0 | -0,232 | -0,232 | 47,4 | 2,5 |
| 3 | -1 | 13,7 | 0 | 0,134 | 82,1 | 15,5 |
| 3 | 2 | 0 | 0,661 | -0,661 | 82,1 | 4,5 |

Les inventeurs fournissent maintenant une interprétation intuitive de l'invention, pour l'annulation du biais de mesure qui est dû à la réalisation de la (des) source(s) Raman chacune à partir d'une source laser modulée.

L'interféromètre atomique produit des mesures de grandeurs inertielles telles que l'accélération ou la rotation, en détectant le mouvement d'un ensemble d'atomes froids par rapport à un référentiel qui est lié à la source Raman. Plus précisément, à chaque interaction entre les atomes et le rayonnement laser de la source Raman, la phase du laser est inscrite dans l'onde de matière qui est associée aux atomes. Ainsi, la phase à la sortie de l'interféromètre correspond à une combinaison des écarts entre les positions des atomes aux moments de leurs interactions avec le rayonnement laser. Dans le cas d'un gravimètre, cette phase est égale à :

$$\varphi = \frac{4\pi}{\lambda} \cdot \{[z(2T) - z(T)] - [z(T) - z(0)]\} = \frac{4\pi}{\lambda} \cdot g \cdot T^2$$

où $\lambda$ est la longueur d'onde du rayonnement laser, et $z(0)$, $z(T)$, $z(2T)$ sont les cotes des positions des atomes au moment des première, deuxième et troisième impulsions, respectivement, pour la séquence de type Mach-Zehnder prise à titre d'exemple. L'axe z de repérage des cotes est parallèle à la direction de la pesanteur **g**.

Il est ainsi possible d'interpréter les mesures inertielles d'un interféromètre atomique comme une succession de mesures des positions des atomes par rapport à une règle graduée dont l'unité de longueur serait égale à la moitié de la longueur d'onde du laser.

L'utilisation d'une source Raman qui est réalisée en modulant une source laser monochromatique initiale, produit une ou plusieurs composante(s) supplémentaire(s) qui provoque(nt) un biais dans la mesure par interférométrie atomique. Ce biais peut être visualisé comme un défaut périodique sur la règle graduée qui sert à mesurer les écarts entre les positions des atomes, parallèlement à l'axe z. L'espacement entre les graduations n'est alors plus constant, mais il varie périodiquement parallèlement à l'axe z avec une période spatiale qui est égale à $C/(2 \cdot v_{mod})$, et qui est appelée longueur de modulation. Il s'agit donc bien d'un biais qui est introduit dans la mesure elle-même.

Une façon d'éliminer ou de réduire ce biais consiste alors à adopter une configuration pour l'interféromètre, dans laquelle les distances à mesurer sont des multiples de la longueur de modulation, c'est-à-dire multiples de $C/(2 \cdot v_{mod})$. Ainsi un interféromètre atomique qui utilise une source Raman réalisée en modulant une source laser monochromatique initiale, aura un biais nul si les écarts entre les positions successives $P_n$ des atomes 10 sont multiples de $C/(2 \cdot v_{mod})$, au moment des interactions entre les atomes 10 et le rayonnement laser S. Cette condition correspond exactement à l'équation (1) qui a été énoncée dans la première partie de cette description.

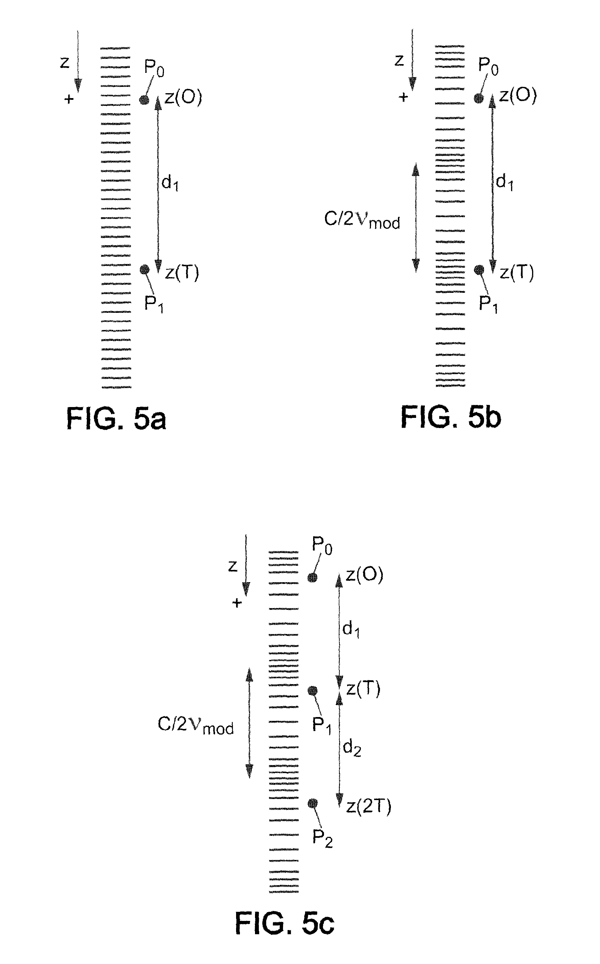

Les figures 5a à 5c illustrent cette interprétation.

La figure 5a correspond à un interféromètre à source Raman qui possède la première constitution présentée dans la partie introductive de la présente description : à deux sources laser distinctes et dépourvue de composante monochromatique autre que celles qui participent aux interactions avec les atomes. Le résultat de la mesure de l'écart $d_1$ entre les cotes $z(0)$ et $z(T)$ correspondant aux positions $P_0$ et $P_1$ des atomes 10 est juste.

La figure 5b correspond à la constitution de la source Raman qui est considérée dans l'invention, mais sans utiliser l'invention. La source Raman est donc constituée d'une source laser initiale qui est modulée. La graduation de repérage des cotes z présente alors la modulation périodique avec la longueur de modulation $C/(2 \cdot v_{mod})$. Cette modulation de l'écartement entre les graduations introduit en général une erreur sur le résultat de la mesure de la distance $d_1$. Aux fins de visualisation, $d_1$ correspond à 16 graduations pour la figure 5a, mais à 12 graduations pour la figure 5b.

Enfin, la figure 5c illustre l'invention. Les positions $P_0$, $P_1$ et $P_2$ ont été sélectionnées pour que les distances $d_1$ et $d_2$ soient égales à des nombres entiers de fois la longueur de modulation de la graduation (une fois cette longueur dans le cas particulier représenté, c'est-à-dire $m_1 = m_2 = 1$). Le résultat de la mesure des distances $d_1$ et $d_2$ n'est alors pas biaisé par la modulation de la graduation.

Toutefois, les inventeurs précisent que l'interprétation de l'invention qui vient d'être présentée n'a pas de fondement rigoureux, et ne correspond pas à une résolution des équations fondamentales qui décrivent les phénomènes physiques mis en oeuvre.

Finalement, il est entendu que l'invention peut être appliquée à de nombreuses configurations d'appareil de type capteurs inertiels, bien que ces configurations soient différentes de celles qui ont été décrites en détail et illustrées. L'annulation du biais de mesure qui est causé par la source Raman à modulation d'une source laser initiale, ou tout au moins une réduction de ce biais de mesure, est obtenue identiquement.

**Revendications**

1. Procédé de mesure par interférométrie atomique, dans lequel plusieurs interactions sont successivement provoquées entre un rayonnement laser (S) et des atomes (10) évoluant sur une trajectoire (TRAJ) non située dans un plan ($P_D$) perpendiculaire à une direction (D) de propagation du rayonnement laser, de façon à former un interféromètre pour les atomes,
le rayonnement laser (S) utilisé pour chaque interaction à différentes positions ($P_0$, $P_1$, $P_2$) des atomes sur la trajectoire comprenant au moins une première et une seconde composantes monochromatiques avec des fréquences respectives ($\lambda_1$, $\lambda_2$) distinctes, de sorte que l'interaction soit de type Raman à deux photons, avec une absorption et une émission stimulée chacune par la première ou la seconde composante monochromatique,
la première composante monochromatique étant une partie d'un rayonnement laser monochromatique initial (I), et la seconde composante monochromatique résultant d'une modulation dudit rayonnement laser monochromatique initial à une fréquence de modulation ($v_{mod}$) déterminée,

le procédé étant **caractérisé en ce qu'**une distance ($d_1$, $d_2$) entre deux quelconques des positions ($P_0$, $P_1$, $P_2$) auxquelles sont provoquées des interactions, mesurée selon la direction de propagation (D) du rayonnement laser (S), est multiple d'une longueur de modulation à $\pm 10\%$ près de ladite longueur de modulation, et ladite longueur de modulation étant égale à la vitesse de propagation du rayonnement laser divisée par le double de la fréquence de modulation ($v_{mod}$) déterminée.

2. Procédé selon la revendication 1, suivant lequel les atomes (10) sont soumis seulement à un champ de pesanteur **g** et, quelque soit le couple d'interactions successives entre le rayonnement laser (S) et les atomes, les relations suivantes sont satisfaites à moins de 5% près par rapport à la valeur de chaque membre d'égalité :

$$T = [a \cdot C \: / \: (2 \cdot v_{mod} \cdot \mathbf{g} \cdot \mathbf{u})]^{1/2} \qquad\qquad (2a)$$

$$\mathbf{v_0} \cdot \mathbf{u} = (b \: - \: a/2) \: / \: [C \cdot \mathbf{g} \cdot \mathbf{u} \: /(2 \cdot a \cdot v_{mod})]^{1/2} \qquad\qquad (2b)$$

où T est la durée de séparation entre les deux interactions successives, **u** est un vecteur unitaire parallèle à la direction de propagation (D) du rayonnement laser (S), a et b sont des nombres entiers, a étant non nul, et **$v_0$** est un vecteur de vitesse des atomes (10) au moment de la première interaction.

3. Procédé selon la revendication 2, suivant lequel les interactions successives entre les atomes (10) et le rayonnement laser (S) constituent une séquence de type Mach-Zehnder, comprenant trois impulsions de rayonnement laser produites à intervalles de temps réguliers, respectivement une première impulsion $\pi/2$, puis une seconde impulsion $\pi$, et une dernière impulsion $\pi/2$, et suivant lequel le nombre b est égal à (-a+1)/2 ou (a+1)/2 si le nombre a est impair, et le nombre b est égal à (-a+2)/2 ou (a+2)/2 si le nombre a est pair.

4. Procédé selon la revendication 3, suivant lequel le nombre a est égal à 3 et le nombre b est égal à -1 ou 2, ou bien le nombre a est égal à 1 et le nombre b est égal à 0 ou 1.

5. Procédé selon l'une quelconque des revendications précédentes, suivant lequel la distance ($d_1$, $d_2$) entre deux des positions ($P_0$, $P_1$, $P_2$) des atomes (10) auxquelles sont provoquées des interactions avec le rayonnement laser (S) est ajustée selon l'une des méthodes suivantes :

/i/ en ajustant les intervalles de temps séparant les interactions entre les atomes et le rayonnement laser et en ajustant la vitesse initiale ($v_i$) des atomes lors d'un lancement des dits atomes au début de la trajectoire (TRAJ) ; ou
/ii/ en ajustant les intervalles de temps séparant les interactions entre les atomes et le rayonnement laser et en ajustant une durée d'attente entre le placement des atomes (10) au début de la trajectoire (TRAJ), avec une vitesse initiale ($v_i$) nulle des dits atomes, et la première interaction des atomes avec le rayonnement laser (S) ; ou
/iii/ en combinant les méthodes /i/ et /iii/.

6. Procédé selon l'une quelconque des revendications précédentes, suivant lequel la trajectoire (TRAJ) des atomes (10) est rectiligne et parallèle à la direction de propagation (D) du rayonnement laser (S), et superposée audit rayonnement laser.

7. Procédé selon l'une quelconque des revendications précédentes, adapté pour mesurer une accélération, une vitesse de rotation, un champ de pesanteur, ou un gradient de champ de pesanteur.

8. Appareil de mesure par interférométrie atomique comprenant :

- une source d'atomes (3) adaptée pour produire un ensemble initial d'atomes (10) destinés à évoluer sur une trajectoire (TRAJ) ;
- un système d'interférométrie, adapté pour former un interféromètre pour les atomes, et comprenant lui-même :

. un dispositif (1) de production d'un rayonnement laser (S), agencé pour provoquer successivement plusieurs interactions entre les atomes et le rayonnement laser, et comprenant pour produire chaque interaction :

une source laser (1 a) adaptée pour produire un rayonnement laser monochromatique initial (I) ; et

un modulateur (1 b) agencé pour moduler le rayonnement laser monochromatique initial (I), de sorte que chaque rayonnement laser (S) utilisé pour une des interactions comprenne au moins une première et une seconde composantes monochromatiques ayant des fréquences respectives ($\lambda_1$, $\lambda_2$) distinctes, et adaptées pour que chaque interaction soit de type Raman à deux photons, avec une absorption et une émission stimulée chacune par la première ou la seconde composante monochromatique, la première composante monochromatique étant une partie du rayonnement laser monochromatique initial (I), et la seconde composante monochromatique résultant d'une modulation dudit rayonnement laser monochromatique initial réalisée par ledit modulateur à une fréquence de modulation ($v_{mod}$) déterminée ; et

. une unité de contrôle (5a ; 1d) adaptée pour envoyer le rayonnement laser (S) sur les atomes (10) lorsque les dits atomes se trouvent à des positions ($P_0$, $P_1$, $P_2$) déterminées sur la trajectoire (TRAJ), ladite trajectoire n'étant pas située dans un plan ($P_D$) perpendiculaire à une direction de propagation (D) du rayonnement laser (S) ; et

- un dispositif de détection (4) agencé pour fournir un résultat de mesure basé sur l'interférence,

**caractérisé en ce que** l'unité de contrôle (5a ; 1 d) est en outre ajustée pour envoyer le rayonnement laser (S) sur les atomes (10) lorsqu'une distance ($d_1$, $d_2$) entre deux quelconques des positions ($P_0$, $P_1$, $P_2$) auxquelles sont provoquées des interactions, mesurée selon la direction de propagation (D) du rayonnement laser (S), est multiple d'une longueur de modulation à $\pm 10\%$ près de ladite longueur de modulation, et ladite longueur de modulation étant égale à la vitesse de propagation du rayonnement laser divisée par le double de la fréquence de modulation ($v_{mod}$) déterminée.

9. Appareil selon la revendication 8, adapté en outre pour mettre en oeuvre un procédé selon l'une quelconque des revendications 2 à 4.

10. Appareil selon la revendication 8 ou 9, comprenant en outre des moyens pour modifier une vitesse initiale ($v_i$) des atomes (10) lors d'un lancement des dits atomes au début de la trajectoire (TRAJ), les dits moyens étant agencés de sorte que la distance ($d_1$, $d_2$) entre deux des positions ($P_0$, $P_1$, $P_2$) des atomes auxquelles sont provoquées des interactions soit ajustée en modifiant la vitesse initiale des atomes.

11. Appareil selon l'une quelconque des revendications 8 à 10, comprenant en outre un obturateur optique (5) disposé pour contrôler des instants d'interactions des atomes (10) avec le rayonnement laser (S), et des moyens de commande (5a) de l'obturateur adaptés pour ajuster la distance ($d_1$, $d_2$) entre deux des positions ($P_0$, $P_1$, $P_2$) des atomes auxquelles sont provoquées les interactions.

12. Appareil selon l'une quelconque des revendications 8 à 11, agencé de sorte que la trajectoire (TRAJ) des atomes (10) soit rectiligne et parallèle à la direction de propagation (D) du rayonnement laser (S), et superposée audit rayonnement laser.

13. Appareil selon l'une quelconque des revendications 8 à 12, de type capteur inertiel.

14. Appareil selon la revendication 13, de type sélectionné parmi un accéléromètre, un gyromètre, un gravimètre ou un gradiomètre.

**Patentansprüche**

1. Verfahren zur Messung mittels Atominterferometrie, wobei nacheinander mehrere Interaktionen ausgelöst werden zwischen einer Laserstrahlung (S) und Atomen (10), die sich auf einer Bahn (TRAJ) bewegen, welche sich nicht in einer zu einer Ausbreitungsrichtung (D) der Laserstrahlung senkrechten Ebene ($P_D$) befindet, um so ein Interferometer für die Atome zu bilden,

wobei die Laserstrahlung (S), die für jede Interaktion an verschiedenen Positionen ($P_0$, $P_1$, $P_2$) der Atome auf der Bahn genutzt wird, zumindest eine erste und eine zweite monochromatische Komponente mit jeweils unterschiedlichen Frequenzen ($\lambda_1$, $\lambda_2$) umfasst, sodass die Interaktion eine Interaktion vom Raman-Typ mit zwei Photonen ist, wobei durch die erste und die zweite monochromatische Komponente jeweils eine Absorption bzw. eine Emission stimuliert werden,

wobei die erste monochromatische Komponente ein Teil einer initialen monochromatischen Laserstrahlung (I) ist und die zweite monochromatische Komponente aus einer Modulation der initialen monochromatischen Laserstrahlung mit einer bestimmten Modulationsfrequenz ($v_{mod}$) resultiert,

wobei das Verfahren **dadurch gekennzeichnet ist, dass** ein Abstand ($d_1$, $d_2$) zwischen zwei beliebigen der Positionen ($P_0$, $P_1$, $P_2$), an denen Interaktionen ausgelöst werden, gemessen entlang der Ausbreitungsrichtung (D) der Laserstrahlung (S), Vielfaches einer Modulationslänge mit einer Genauigkeit von $\pm$ 10 % der Modulationslänge ist, und wobei die Modulationslänge gleich der Ausbreitungsgeschwindigkeit der Laserstrahlung geteilt durch das Doppelte der bestimmten Modulationsfrequenz ($v_{mod}$) ist.

2. Verfahren nach Anspruch 1, wonach die Atome (10) allein einem Gravitationsfeld g ausgesetzt sind und unabhängig vom Paar aufeinanderfolgender Interaktionen zwischen der Laserstrahlung (S) und den Atomen die folgenden Beziehungen mit einer Genauigkeit von weniger als 5 % in Bezug auf den Wert jedes Gleichungsglieds erfüllt sind:

$$T = [a \cdot C/(2 \cdot v_{mod} \cdot g \cdot u)]^{1/2} \qquad (2a)$$

$$v_0 \cdot u = (b - a/2)/[C \cdot g \cdot u/(2 \cdot a \cdot v_{mod})]^{1/2} \qquad (2b)$$

wobei T die Trennungsdauer zwischen den beiden aufeinanderfolgenden Interaktionen ist, u ein zur Ausbreitungsrichtung (D) der Laserstrahlung (S) paralleler Einheitsvektor ist, a und b ganze Zahlen sind, a ungleich Null ist und $v_0$ ein Geschwindigkeitsvektor der Atome (10) zum Zeitpunkt der ersten Interaktion ist.

3. Verfahren nach Anspruch 2, wonach die aufeinanderfolgenden Interaktionen zwischen den Atomen (10) und der Laserstrahlung (S) eine Sequenz vom Mach-Zehnder-Typ darstellen, die drei, in regelmäßigen Zeitintervallen erzeugte Laserstrahlungsimpulse umfasst, und zwar jeweils einen ersten Impuls $\pi/2$, anschließend einen zweiten Impuls $\pi$ und einen letzten Impuls $\pi/2$, und wonach die Zahl b gleich (-a+1)/2 oder (a+1)/2 ist, wenn die Zahl a ungerade ist, und die Zahl b gleich (-a+2)/2 oder (a+2)/2 ist, wenn die Zahl a gerade ist.

4. Verfahren nach Anspruch 3, wonach die Zahl a gleich 3 ist und die Zahl b gleich -1 oder 2 ist, oder aber die Zahl a gleich 1 ist und die Zahl b gleich 0 oder 1 ist.

5. Verfahren nach einem der vorangehenden Ansprüche, wonach der Abstand ($d_1$, $d_2$) zwischen zweien der Positionen ($P_0$, $P_1$, $P_2$) der Atome (10), an denen Interaktionen mit der Laserstrahlung (S) ausgelöst werden, nach einer der folgenden Methoden eingestellt wird:

/i/ durch Einstellen der Zeitintervalle, welche die Interaktionen zwischen den Atomen und der Laserstrahlung trennen, und durch Einstellen der initialen Geschwindigkeit ($v_i$) der Atome bei einem Start der Atome am Anfang der Bahn (TRAJ); oder

/ii/ durch Einstellen der Zeitintervalle, welche die Interaktionen zwischen den Atomen und der Laserstrahlung trennen, und durch Einstellen einer Wartezeit zwischen der Anordnung der Atome (10) am Anfang der Bahn (TRAJ), wo die initiale Geschwindigkeit ($v_i$) der Atome Null beträgt, und der ersten Interaktion des Atome mit der Laserstrahlung (S); oder

/iii/ durch Kombinieren der Methoden /i/ und /iii/.

6. Verfahren nach einem der vorangehenden Ansprüche, wonach die Bahn (TRAJ) der Atome (10) geradlinig und parallel zur Ausbreitungsrichtung (D) der Laserstrahlung (S) ist und über der Laserstrahlung liegt.

7. Verfahren nach einem der vorangehenden Ansprüche, das geeignet ist, eine Beschleunigung, eine Rotationsgeschwindigkeit, ein Gravitationsfeld oder einen Gravitationsfeldgradienten zu messen.

8. Gerät zum Messen durch Atominterferometrie, umfassend:

- eine Atomquelle (3), die geeignet ist, eine initiale Menge von Atomen (10) zu erzeugen, die bestimmt sind, sich auf einer Bahn (TRAJ) zu bewegen;
- ein Interferometriesystem, das geeignet ist, ein Interferometer für die Atome zu bilden, und seinerseits Folgendes umfasst:

· eine Vorrichtung (1) zur Erzeugung einer Laserstrahlung (S), die eingerichtet ist, um nacheinander mehrere Interaktionen zwischen den Atomen und der Laserstrahlung auszulösen, und zum Erzeugen jeder Interaktion Folgendes umfasst:

eine Laserquelle (1a), die geeignet ist, eine initiale monochromatische Laserstrahlung (I) zu erzeugen; und

einen Modulator (1b), der eingerichtet ist, um die initiale monochromatische Laserstrahlung (I) so zu modulieren, dass jede für eine der Interaktionen genutzte Laserstrahlung (S) zumindest eine erste und eine zweite

monochromatische Komponente umfasst, die jeweils unterschiedliche Frequenzen ($\lambda_1$, $\lambda_2$) aufweisen und geeignet sind, dass jede Interaktion eine Interaktion vom Raman-Typ mit zwei Photonen ist, wobei durch die erste und die zweite monochromatische Komponente jeweils eine Absorption bzw.

eine Emission stimuliert werden, wobei die erste monochromatische Komponente ein Teil der initialen monochromatischen Laserstrahlung (I) ist und die zweite monochromatische Komponente aus einer durch den Modulator ausgeführten Modulation der initialen monochromatischen Laserstrahlung mit einer bestimmten

Modulationsfrequenz ($V_{mod}$) resultiert; und

· eine Steuereinheit (5a; 1d), die geeignet ist, die Laserstrahlung (S) auf die Atome (10) zu richten, wenn sich die Atome an bestimmten Positionen ($P_0$, $P_1$, $P_2$) auf der Bahn (TRAJ) befinden, wobei sich die Bahn nicht in einer zu einer Ausbreitungsrichtung (D) der Laserstrahlung (S) senkrechten Ebene ($P_D$) befindet; und

- eine Erfassungsvorrichtung (4), die eingerichtet ist, ein auf der Interferenz basierendes Messergebnis bereitzustellen,
**dadurch gekennzeichnet, dass** die Steuereinheit (5a; 1d) ferner eingestellt ist, die Laserstrahlung (S) auf die Atome (10) zu richten, wenn ein Abstand ($d_1$, $d_2$) zwischen zwei beliebigen der Positionen ($P_0$, $P_1$, $P_2$), an denen Interaktionen ausgelöst werden, gemessen entlang der Ausbreitungsrichtung (D) der Laserstrahlung (S), Vielfaches einer Modulationslänge mit einer Genauigkeit von $\pm$ 10 % der Modulationslänge ist, und wobei die Modulationslänge gleich der Ausbreitungsgeschwindigkeit der Laserstrahlung geteilt durch das Doppelte der bestimmten Modulationsfrequenz ($v_{mod}$) ist.

9. Gerät nach Anspruch 8, das ferner geeignet ist, ein Verfahren nach einem der Ansprüche 2 bis 4 auszuführen.

10. Gerät nach Anspruch 8 oder 9, ferner umfassend Mittel zum Verändern einer initialen Geschwindigkeit ($v_i$) der Atome (10) bei einem Start der Atome am Anfang der Bahn (TRAJ), wobei die Mittel so eingerichtet sind, dass der Abstand ($d_1$, $d_2$) zwischen zweien der Positionen ($P_0$, $P_1$, $P_2$) der Atome, an denen Interaktionen ausgelöst werden, durch Verändern der initialen Geschwindigkeit der Atome eingestellt wird.

11. Gerät nach einem der Ansprüche 8 bis 10, ferner umfassend einen optischen Verschluss (5), der angeordnet ist, Momente von Interaktionen der Atome (10) mit der Laserstrahlung (S) zu steuern, und Mittel (5a) zum Bedienen des Verschlusses, die geeignet sind, den Abstand ($d_1$, $d_2$) zwischen zweien der Positionen ($P_0$, $P_1$, $P_2$) der Atome, an denen Interaktionen ausgelöst werden, einzustellen.

12. Gerät nach einem der Ansprüche 8 bis 11, das so eingerichtet ist, dass die Bahn (TRAJ) der Atome (10) geradlinig und parallel zur Ausbreitungsrichtung (D) der Laserstrahlung (S) ist und über der Laserstrahlung liegt.

13. Gerät nach einem der Ansprüche 8 bis 12 vom Typ eines Trägheitssensors.

14. Gerät nach Anspruch 13, vom Typ eines Beschleunigungssensors, eines Gravimeters oder eines Gradiometers.

**Claims**

1. Method of measurement by means of atom interferometry, in which several interactions between a laser radiation (S) and atoms (10) are successively caused, the atoms progressing over a path (PATH) which is not situated in a plane ($P_D$) perpendicular to an axis of propagation (D) of the laser radiation, so as to form an interferometer for the atoms,

the laser radiation (S) used for each interaction at different positions ($P_0$, $P_1$, $P_2$) of the atoms on their path, comprising at least one first and one second monochromatic components with respective frequencies ($\lambda_1$, $\lambda_2$) which are distinct, so that the interaction is of two-photon Raman type, with an absorption and an emission each stimulated by the first or the second monochromatic component.

the first monochromatic component being part of an initial laser radiation (I), and the second monochromatic component resulting from a modulation of said initial laser radiation at a determined modulation frequency ($v_{mod}$),

the method being **characterized in that** a distance ($d_1$, $d_2$) between any two of the positions ($P_0$, $P_1$, $P_2$) at which interactions are caused, measured along the axis of propagation (D) of the laser radiation (S), is a multiple of a modulation length to within $\pm 10\%$ of this modulation length, and said modulation length is equal to the velocity of propagation of the laser radiation divided by twice the determined modulation frequency ($v_{mod}$).

2. Method according to claim 1, wherein the atoms (10) are subjected only to a gravity field **g** and, irrespective of the pair of successive interactions between the laser radiation (S) and the atoms, the following relationships are satisfied to within 5% with respect to the value of each equality:

$$T = [a \cdot C / (2 \cdot v_{mod} \cdot \mathbf{g} \cdot \mathbf{u})]^{1/2} \qquad (2a)$$

$$\mathbf{v}_0 \cdot \mathbf{u} = (b - a/2) / [C \cdot \mathbf{g} \cdot \mathbf{u} / (2 \cdot a \cdot v_{mod})]^{1/2} \qquad (2b)$$

where T is the period of time separating the two successive interactions, u is a unit vector parallel to the axis of propagation (D) of the laser radiation (S), a and b are integers, a being non-zero, and $\mathbf{v_0}$ is a velocity vector of the atoms (10) at the time of the first interaction.

3. Method according to claim 2, wherein the successive interactions between the atoms (10) and the laser radiation (S) constitute a Mach-Zehnder type sequence, comprising three pulses of laser radiation which are produced at regular time intervals, respectively a first $\pi/2$ pulse, then a second $\pi$ pulse, and a last $\pi/2$ pulse, and wherein the number b is equal to $(-a+1)/2$ or $(a+1)/2$ if the number a is odd, and the number b is equal to $(-a+2)/2$ or $(a+2)/2$ if the number a is even.

4. Method according to claim 3, wherein the number a is equal to 3 and the number b is equal to -1 or 2, or the number a is equal to 1 and the number b is equal to 0 or 1.

5. Method according to any one of the preceding claims, wherein the distance ($d_1$, $d_2$) between two of the positions ($P_0$, $P_1$, $P_2$) of the atoms (10) at which interactions are caused with the laser radiation (S) is adjusted according to one of the following methods:

/i/ by adjusting the time intervals separating the interactions between the atoms and the laser radiation and by adjusting the initial velocity ($v_i$) of the atoms when said atoms are launched at the start of the path (PATH); or
/ii/ by adjusting the time intervals separating the interactions between the atoms and the laser radiation and by adjusting a waiting time between the placing of the atoms (10) at the start of the path (PATH), with an initial zero velocity ($v_i$) of said atoms, and the first interaction of the atoms with the laser radiation (S); or
/iii/ by combining methods /i/ and /iii/.

6. Method according to any one of the preceding claims, wherein the path (PATH) of the atoms (10) is rectilinear and parallel to the axis of propagation (D) of the laser radiation (S), and superimposed on said laser radiation.

7. Method according to any one of the preceding claims, suitable for measuring an acceleration, a speed of rotation, a gravity field, or a gravity field gradient.

8. Device for measurement by atom interferometry comprising:

- a source of atoms (3) suitable for producing an initial set of atoms (10) intended to progress over a path (PATH);
- an interferometry system, which is suitable for forming an interferometer for the atoms, and itself comprising:

. a device (1) for producing a laser radiation (S), arranged in order to successively cause several interactions between atoms and the laser radiation, and comprising in order to produce each interaction:

a laser source (1a) suitable for producing an initial monochromatic laser radiation (I); and

a modulator (1 b) arranged for modulating the initial monochromatic laser radiation (I), so that each laser radiation (S) used for one of the interactions comprises at least one first and one second monochromatic components having respective frequencies ($\lambda_1$, $\lambda_2$) which are distinct, and suitable so that each interaction is of two-photon Raman type, with an absorption and an emission each stimulated by the first or the second monochromatic component, the first monochromatic component being part of the initial monochromatic laser radiation (I), and the second monochromatic component resulting from a modulation of said initial monochromatic laser radiation produced by said modulator at a determined modulation frequency ($v_{mod}$); and

. a control unit (5a; 1d) suitable for directing the laser radiation (S) at the atoms (10) when said atoms are situated at determined positions ($P_0$, $P_1$, $P_2$) on the path (PATH), said path not being situated in a plane ($P_D$) perpendicular to an axis of propagation (D) of the laser radiation (S); and

- a detection device (4) arranged in order to provide a measurement result based on the interference,

**characterized in that** the control unit (5a; 1d) is moreover adjusted in order to direct the laser radiation (S) at the atoms (10) when the distance ($d_1$, $d_2$) between any two of the positions ($P_0$, $P_1$, $P_2$) at which the interactions are caused, measured along the axis of propagation (D) of the laser radiation (S), is a multiple of a modulation length to within $\pm 10\%$ of said modulation length, and said modulation length being equal to the velocity of propagation of the laser radiation divided by twice the determined modulation frequency ($v_{mod}$).

9. Device according to claim 8, suitable moreover for implementing a method according to any one of claims 2 to 4.

10. Device according to claim 8 or 9, comprising moreover means for modifying an initial velocity ($v_i$) of the atoms (10) during a launching of said atoms at the start of the path (PATH), said means being arranged so that the distance ($d_1$, $d_2$) between two of the positions ($P_0$, $P_1$, $P_2$) of the atoms at which the interactions are caused is adjusted by modifying the initial velocity of the atoms thereof.

11. Device according to any one of claims 8 to 10, comprising moreover an optical shutter (5) arranged for controlling the synchronisation of the interactions between the atoms (10) and the laser radiation (S), and control means (5a) of the shutter suitable for adjusting the distance ($d_1$, $d_2$) between two of the positions ($P_0$, $P_1$, $P_2$) of the atoms at which the interactions are caused.

12. Device according to any one of the claims 8 to 11, arranged so that the path (PATH) of the atoms (10) is rectilinear and parallel to the axis of propagation (D) of the laser radiation (S), and superimposed on said laser radiation.

13. Device according to any one of the claims 8 to 12, of inertial sensor type.

14. Device according to claim 13, of a type selected from an accelerometer, a gyrometer, a gravimeter or a gradiometer.

FIG. 1

FIG. 3a

FIG. 3b

FIG. 2a

**FIG. 2b**

**FIG. 4a**

**FIG. 4b**

FIG. 5a

FIG. 5b

FIG. 5c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE O. CARRAZ et al.** Compact and robust laser system for onboard atom interferometry. *Applied Physics B,* 2009, vol. 97, 405-411

- **DE O. CARRAZ.** *Gravimètre atomique embarquable : Etude théorique et expérimentale de l'instrument,* 19 Décembre 2009